(19) Europäisches Patentamt / European Patent Office / Office européen des brevets

(11) **EP 4 253 445 A1**

(12) **EUROPEAN PATENT APPLICATION**
published in accordance with Art. 153(4) EPC

(43) Date of publication:
**04.10.2023 Bulletin 2023/40**

(21) Application number: **21898747.7**

(22) Date of filing: **30.11.2021**

(51) International Patent Classification (IPC):
**C08G 63/12** (2006.01)          **C08G 18/42** (2006.01)

(52) Cooperative Patent Classification (CPC):
**C08G 18/42; C08G 63/12**

(86) International application number:
**PCT/KR2021/017881**

(87) International publication number:
**WO 2022/114922 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020   KR 20200165222
27.05.2021   KR 20210068094**

(71) Applicant: **Lotte Chemical Corporation
Seoul, 05551 (KR)**

(72) Inventors:
• **YUN, Jae Kyung
  Daejeon 34110 (KR)**
• **WOO, In Seob
  Daejeon 34110 (KR)**
• **KIM, Ha Young
  Daejeon 34110 (KR)**
• **JEONG, Jun Kyo
  Daejeon 34110 (KR)**

(74) Representative: **Germain Maureau
12, rue Boileau
69006 Lyon (FR)**

(54) **POLYESTER POLYOL AND POLYURETHANE PREPARED THEREFROM**

(57)   The present invention relates to polyester polyol and polyurethane prepared from the polyester polyol, the polyester polyol being prepared from an acid component containing at least one type of pure isophthalic acid (PIA) and phthalic anhydride (PA) and an alcohol component represented by chemical formula 1:

[Chemical Formula 1]          HO-L$_3$-OH

L$_3$ is a straight or branched chain alkylene group having 2 to 6 carbon atoms substituted or unsubstituted with a hydroxyl group; or a straight or branched chain ether group having 2 to 6 carbon atoms substituted or unsubstituted with a hydroxyl group.
   The polyester polyol according to the present invention has excellent storage stability and compatibility, and the polyurethane prepared using the polyester polyol has excellent flame retardancy and dimensional stability.

EP 4 253 445 A1

**Description**

[Technical field]

The present invention relates to a polyester polyol for preparing a semi-incombustible rigid polyurethane and a polyurethane prepared therefrom.

[Background Art]

As energy saving policies for greenhouse gas reduction are strengthened globally, the role of heat insulation materials among building materials is becoming more important. In addition, due to a series of building fires, interest in materials that can satisfy not only heat insulation properties but also flame retardancy is increasing. Polyurethane foam has excellent heat insulation properties compared to other materials (EPS, XPS, Rockwool) and has recently attracted a lot of attention as a heat insulation material, but its use has slowed down due to flame retardancy issues.

Among polyols that are an essential component of polyurethane, a polyether polyol and a polyester polyol are known as the most common polyols. These polyols have a significant effect on the properties of the polyurethane or polyurethane foam to be prepared.

In general, a polyol having a high molecular weight and low functionality is used to prepare a soft urethane foam, and a polyol having a small molecular weight and high functionality is used to prepare a rigid urethane foam.

Meanwhile, since the polyurethane foam, especially the rigid polyurethane foam, is used in various fields, there is a difference in required physical properties depending on the application field. When used as a heat insulation material for interior and exterior building materials, it particularly requires flame retardancy, dimensional stability, formability, heat insulation, and eco-friendliness.

A polyester polyol with a phthalic anhydride (PA)-based backbone structure was used as the main resin of the universally used rigid polyurethane foam (PUR/PIR), but due to its poor flame retardancy, the polyol was recently developed with a high-purity terephthalic acid (PTA)-based backbone. However, when the polyester polyol having a PTA structure alone is used, the flame retardancy of the polyurethane produced from this raw material is secured, but the crystallinity of the polyester polyol is high, and solidification problems occur at room temperature, resulting in poor storability.

Although it was developed with a PTA/PA base to compensate for these disadvantages, difficulties in market application are likely to occur when flame retardancy regulations are strengthened. Meanwhile, when high-purity isophthalic acid (PIA: Purified Isophthalic Acid) is used as a base, flame retardancy is excellent, but there are problems of compatibility and an increase in viscosity.

[Related Art Document]

(Patent Document)

(Patent Document 1) Korean Patent Publication No. 2012-0027422

[Disclosure]

[Technical Problem]

In order to solve the above problems, the present invention is directed to providing a polyester polyol with low viscosity, excellent storage stability and compatibility, and a polyurethane with excellent flame retardancy prepared using the polyester polyol.

[Technical Solution]

The present invention provides a polyester polyol prepared from:

an acid component including at least one of purified isophthalic acid (PIA) or phthalic anhydride (PA); and
an alcohol component represented by Chemical Formula 1:

[Chemical Formula 1]     **HO-L$_3$-OH**

wherein L$_3$ is a straight or branched chain alkylene group having 2 to 6 carbon atoms and unsubstituted or substituted with a hydroxyl group; or a straight or branched chain ether group having 2 to 6 carbon atoms and unsubstituted or substituted with a hydroxyl group.

The present invention also provides a polyurethane prepared by reacting the polyester polyol with one or more compounds including two or more isocyanate groups.

[Advantageous Effects]

The present invention can provide a polyester polyol having excellent storage stability, low viscosity, and excellent reactivity with isocyanate. In addition, a polyurethane prepared using the polyester polyol according to the present invention has excellent flame retardancy and dimensional stability.

[Best Mode for Implementation of the Invention]

In the present invention, for preparation of a polyester polyol, an acid component selected from the group consisting of purified isophthalic acid (PIA) and phthalic anhydride (PA), and an alcohol component represented by Chemical Formula 1 below are used:

[Chemical Formula 1]          $HO-L_3-OH$

wherein $L_3$ is a straight or branched chain alkylene group having 2 to 6 carbon atoms and unsubstituted or substituted with a hydroxyl group; or a straight or branched chain ether group having 2 to 6 carbon atoms and unsubstituted or substituted with a hydroxyl group.

To prepare an aromatic polyester polyol with compatibility, low viscosity, and excellent storage stability, the present invention suggests the type and mixing ratio of an acid component, uses a specific alcohol component, and has an optimal OH value and an acid value therefrom to provide an aromatic polyester polyol having excellent reactivity with isocyanate by lowering crystallinity and controlling low viscosity (low molecular weight distribution increase). Furthermore, the present invention provides a flame-retardant polyurethane prepared therefrom.

In the present invention, purified isophthalic acid (PIA) or phthalic anhydride (PA) may be used as the acid component, which may be used alone or in combination. In particular, the present invention provides a polyol including PIA as the acid component, wherein PIA may be included in an amount of 80 to 100 mol%.

As in one embodiment of the present specification, a polyester polyol represented by Chemical Formula 1 is composed of a phthalic anhydride (PA)-based and a purified isophthalic acid (PIA)-based backbone instead of a high-purity terephthalic acid (PTA)-based backbone. PIA has a low steric hindrance compared to the PTA-based backbone, so that it has excellent reactivity with isocyanate and can increase the flame retardancy of the prepared polyurethane. Therefore, in the present invention, PIA is included as an acid component of the polyester polyol, and the PIA is included in an amount of 80 to 100 mol% in the acid component to obtain desired effects.

In addition, when a certain amount of PA is mixed and used as the acid component, it is possible to provide a semi-incombustible aromatic polyester polyol having excellent reactivity with isocyanate by lowering crystallinity and controlling low viscosity (low molecular weight distribution increase).

Meanwhile, an alcohol component represented by Chemical Formula 1 in the present invention may include monoethyl glycol, diethylene glycol, neopentyl glycol, methyl propanediol, and trimethylol propane, and in particular, neopentyl glycol (NPG) or diethylene glycol (DEG).

NPG has an effect of increasing solubility due to its bulky structure, and has a methyl group (short chain), so that NPG has an effect of improving flame retardancy and compatibility compared to DEG due to the van der Waals interaction effect. In addition, since NPG includes tertiary carbon atoms, it has relatively high thermal stability and has an effect of lowering crystallinity. Therefore, in one embodiment of the present invention, NPG is used as the alcohol component of the polyester polyol, and at this time, it is proposed to use it together with DEG.

When NPG and DEG are used together as the alcohol component, a mixing ratio is preferably in a range of 1:2 to 1:20 in terms of a molar ratio in order to obtain an effect of using NPG.

The polyester polyol of the present invention is prepared using the acid component and the alcohol component in a mixing ratio of 1.0:1.4 to 2.0 mol. In addition, for a reaction of the acid component and the alcohol component, the reaction is carried out at a temperature of 170 to 240 °C at atmospheric pressure in the presence of a catalyst such as butylstannonic acid, butyltin tris-2-ethylhexanoate, tertabutyl titanate, or the like for 7 to 12 hours.

The polyester polyol of the present invention preferably has a weight average molecular weight of 300 g/mol to 3,000 g/mol in terms of storage stability and flame retardancy of polyurethane prepared using the same. Specifically, when the weight average molecular weight of the polyester polyol is less than 300 g/mol, preparation is difficult, and when the weight average molecular weight exceeds 3,000 g/mol, the storage properties and urethane reactivity of the polyester polyol are lowered, so that the flame retardancy of the polyurethane may be reduced.

As the polyester polyol of the present invention uses PIA or PA as the acid component, especially includes PIA, and uses DEG or a mixture of DEG and NPG as the alcohol component, low viscosity is controlled to increase a low molecular weight distribution, and reactivity with isocyanate is excellent. Therefore, it is advantageous in terms of preparation of the polyurethane.

The present invention provides a polyurethane prepared by reacting the polyester polyol with one or more compounds including two or more isocyanate groups. The preparation of the polyurethane may be made by generally known techniques. It usually involves a reaction between an isocyanate component and a polyol component in the presence of a catalyst and a foaming agent.

The one or more compounds including two or more isocyanate groups are compounds including two or more isocyanate groups (-N=C=O), and may include, for example, 1,12-dodecane diisocyanate, 2-ethyltetramethylene 1,4-diisocyanate, 2-methylpentamethylene 1,5-diisocyanate, tetramethylene 1,4-diisocyanate, hexamethylene 1,6-diisocyanate; cyclohexane 1,3-diisocyanate, cyclohexane 1,4-diisocyanate, 1-isocyanato-3,3,5-trimethyl-5-isocyanatomethyl-cyclohexane (IPDI), 2,4-hexahydrotolylene diisocyanate, 2,6-hexahydrotolylene diisocyanate, 4,4'-dicyclohexylmethane diisocyanate, 2,2'-dicyclohexylmethane diisocyanate, 2,4'-dicyclohexylmethane diisocyanate, 2,4-tolylene diisocyanate, 2,6-tolylene diisocyanate, 4,4'-diphenylmethane diisocyanate (MDI), 2,4'-diphenylmethane diisocyanate, 2,2'-diphenylmethane diisocyanate, polyphenylpolymethylene polyisocyanate, 1,5-naphthylene diisocyanate (NDI), 3,3'-dimethylbiphenyl diisocyanate, 1,2-diphenylethane diisocyanate, p-phenylene diisocyanate (PPDI), trimethylene diisocyanate, tetramethylene diisocyanate, pentamethylene diisocyanate, hexamethylene diisocyanate, heptamethylene diisocyanate, octamethylene diisocyanate, 2-methylpentamethylene 1,5-diisocyanate, 2-ethylbutylene 1,4-diisocyanate, pentamethylene 1,5-diisocyanate, butylene 1,4-diisocyanate, 1-isocyanato-3,3,5-trimethyl-5-isocyanatomethyl-cyclohexane (isophorone diisocyanate, IPDI), 1,4-bis (isocyanatomethyl) cyclohexane, 1,3-bis (isocyanatomethyl) cyclohexane (HXDI), 1,4-cyclohexane diisocyanate, isomers thereof, or mixtures thereof, but are not limited thereto.

In one embodiment of the present invention, additional additives may be further included as needed during the preparation of the polyurethane. For example, the additives may include, but are not limited to, commonly used additives such as foaming agents, flame retardants, foam stabilizers, catalysts, surface active materials, cell control agents, fillers, dyes, pigments, and hydrolysis control agents.

In the present specification, the foaming agent includes water, a carboxylic acid, a fluorocarbon-based foaming agent, carbon dioxide, and a hydrocarbon foaming agent such as a linear or branched chain alkane hydrocarbon, but is not limited thereto.

In the present specification, as the flame retardant, a commonly used flame retardant may be used, and the flame retardant may include, for example, brominated ester, brominated ether (Ixol) or brominated alcohol, such as dibromoneopentyl alcohol, tribromoneopentyl alcohol and PHT-4-diol, and also chlorinated phosphates, such as tris(2-chloroethyl) phosphate, tris(2-chloropropyl)phosphate (TCPP), tris(1,3-dichloropropyl)phosphate, tricresyl phosphate, tris(2,3-dibromopropyl) phosphate, tetrakis(2-chloroethyl) ethylenediphosphate, dimethyl methanephosphonate, diethyl diethanolaminomethylphosphonate, and also commercially available halogenated flame retardant polyols. With additional phosphates or phosphonates, a liquid flame retardant includes, but is not limited to, diethyl ethanephosphonate (DEEP), triethyl phosphate (TEP), dimethyl propylphosphonate (DMPP), or diphenyl cresyl phosphate (DPK).

In the present specification, the foam stabilizer includes, but is not limited to, a silicone foam stabilizer, a non-ionic foam stabilizer, a non-silicone foam stabilizer, and the like, and specifically includes dinonyl phenol, methyl glucoside, methyl propanediol, vinyl ether maleic acid, an Si-copolymer series, and the like.

In the present specification, as the catalyst, a commonly used catalyst may be used, and the catalyst may include, but is not limited to, triethylamine, tributylamine, dimethylbenzylamine, dicyclohexylmethylamine, dimethylcyclohexylamine, N,N,N',N'-tetramethyldiaminodiethyl ether, bis(dimethylaminopropyl) urea, N-methylmorpholine, N-ethylmorpholine, N-cyclohexylmorpholine, N,N,N',N'-tetramethylethylenediamine, N,N,N,N-tetramethylbutanediamine, N,N,N,N-tetramethylhexane-1,6-diamine, pentamethyldiethylenetriamine, bis(2-dimethylaminoethyl) ether, dimethyl piperazine, N-dimethylaminoethylpiperidine, 1,2-dimethylimidazole, 1-azabicyclo[2.2.0]octane, 1,4-diazabicyclo[2.2.2]octane (Dabco), triethanol amine, triisopropanolamine, N-methyldiethanolamine, N-ethyldiethanolamine, dimethylaminoethanol, 2-(N,N-dimethylaminoethoxy) ethanol, N,N',N"-tris(dialkyl aminoalkyl) hexahydrotriazine, N,N',N"-tris(dimethylaminopropyl)-s-hexahydrotriazine, triethylenediamine, iron(II) chloride, zinc chloride, lead octoate, tin dioctoate, tin diethylhexoate, dibutyltin dilaurate, tetraisopropyl titanate, butylstanonic acid, butylcrotin dihydroxide, tetrabutyl titanate, and mixtures thereof.

The polyurethane prepared using the polyester polyol according to one embodiment of the present invention has excellent flame retardancy and dimensional stability.

Hereinafter, examples will be given to describe the present invention in detail. However, the examples according to the present invention may be modified into various other forms, and the scope of the present invention is not to be construed as being limited to the examples described below. The examples of the present specification are provided to more completely explain the present invention to those of ordinary skill in the art.

Comparative Example 1

4.6 mol of phthalic anhydride (PA, SigmaAldrich), 8.38 mol of diethylene glycol (DEG, Lotte Chemical Co., Ltd.), and 0.0008 mol of butylstannoic acid (Fascat 4100, Arkema) were added to a 2 L reactor equipped with a stirrer, a packing column, and a stirring bar, and the temperature was primarily raised to 170 °C (2 hours). A stirring speed during the temperature increase process was 200 rpm, and an ES reaction was performed for 2 hours. The temperature was secondarily raised to 230 °C for 3 hours. After holding for 1 hour, a vacuum was set at 200 mmHg, and then a reaction was performed for 2 hours to prepare a resin having an acid value (mg KOH/g resin) of 0.4 and a hydroxyl value (mg KOH/g resin) of 276.

Comparative Examples 2 to 5

A resin was prepared in the same manner as in Comparative Example 1, except for changing some of the conditions described in Table 1 below.

Example 1

4.6 mol of purified isophthalic acid (PIA, Lotte Chemical Co., Ltd.), 7.58 mol of diethylene glycol (DEG, Lotte Chemical Co., Ltd.), 0.84 mol of neopentyl glycol (NPG, LG Chem Co., Ltd.), and 0.0008 mol of butylstannoic acid (Fascat 4100, Arkema) were added to a 2 L reactor equipped with a stirrer, a packing column, and a stirring bar, and the temperature was primarily raised to 170 °C (2 hours). A stirring speed during the temperature increase process was 200 rpm, and an ES reaction was performed for 2 hours. The temperature was secondarily raised to 230 °C for 3 hours. After holding for 1 hour, a vacuum was set at 200 mmHg, and then a reaction was performed for 2 hours to prepare a resin having an acid value (mg KOH/g resin) of 0.5 and a hydroxyl value (mg KOH/g resin) of 281.

Examples 2 and 3

A resin was prepared in the same manner as in Example 1, except for changing some of the conditions described in Table 1 below.

[Table 1]

| Component | Compound | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| Acid (mol) | PA | | 0.46 | 0.92 | 4.6 | | | 1.84 | 1.84 |
| | PTA | | | | | 4.6 | | 2.76 | |
| | PIA | 4.6 | 4.14 | 3.68 | | | 4.6 | | 2.76 |
| Alcohol (mol) | DEG | 7.58 | 7.58 | 8.38 | 8.38 | 8.38 | 8.38 | 8.38 | 8.38 |
| | NPG | 0.84 | 0.84 | - | | | | | |
| Catalyst (mol) | Fascat 4100 | 0.0008 | 0.0008 | 0.0008 | 0.0008 | 0.0008 | 0.0008 | 0.0008 | 0.0008 |
| Physical properties | OH value | 281 | 276 | 276 | 276 | 273 | 275 | 273 | 276 |
| | Acid value | 0.5 | 0.5 | 0.5 | 0.4 | 0.4 | 0.4 | 0.3 | 0.5 |
| | Storage stability (15 °C) | 6 months (◎) | 6 months (◎) | 6 months (◎) | 6 months (◎) | 1 day (X) | 3 months (O) | 3 months (O) | 6 months (◎) |
| | Viscosity (cps) | 16,500 | 14,200 | 10,600 | 5,600 | 12,500 | 12,800 | 8,900 | 8,100 |
| | Compatibility | 3 months (◎) | 3 months (◎) | 3 months (◎) | 3 months (◎) | 1 day (X, solid phase) | 1 month (△, solid phase) | 2 months (O, cloudiness) | 3 months (◎) |
| | TGA 50% (°C) | 425 | 419 | 408 | 375 | 416 | 415 | 396 | 398 |

- PTA (purified terephthalic acid, Lotte Chemical Co., Ltd.)
- Storage stability: A liquid state of samples in a 15 ° C warm storage room was evaluated for 3 months as follows.
X: Gelation or solidification within 2 weeks or within 30% increase compared to an initial viscosity
△: Gelation or solidification within 2 months or within 30% increase compared to an initial viscosity
○: Gelation or solidification within 4 months or within 30% increase compared to an initial viscosity
◎: Gelation or solidification within 6 months or within 30% increase compared to an initial viscosity
- Viscosity: Samples at 25 °C were evaluated with a spindle 64 using a Brookfield viscometer.
- Compatibility: After blending polyol/water/foaming agent (cyclopentane)/foam stabilizer at room temperature, a liquid state was evaluated for 3 months.
X: Gelation or solidification within 2 weeks, △: Gelation or solidification within 1 month, O: Gelation within 2 months, ◎: Within 30% increase compared to an initial viscosity for 3 or more months
- TGA_50% (°C) is a temperature at the 50% weight reduction point in the TGA $N_2$ atmosphere.

Next, polyurethanes were prepared from the polyols. 100 g of resin, 10 g of tris(1-chloro-2-propyl)phosphate (TCPP, flame retardant, SigmaAldrich), 1 g of TEGOSTAB®B8462 (foam stabilizer, silicone surfactant, Evonik), 12 g of cyclopentane (foaming agent, SigmaAldrich), 3.5 g of Dabco k-15 (Catalyst, Evonik), and 1.0 g of N,N-dimethylcyclohexylamine (DMCHA, catalyst, Huntsman), were put into a 2 liter can and then mixed using a high-speed stirrer to prepare a system polyol.

[Table 2]

| Comp onent | POLYOL | Units | Exper iment al Exam ple 1 | Experi ment at Exam ple 2 | Experi ment at Exam ple 3 | Experi menta l Exam ple 4 | Experi mental Exampl e 5 | Experi mental Exampl e 6 | Experi menta l Exam ple 7 | Exper iment al Exam ple 8 |
|---|---|---|---|---|---|---|---|---|---|---|
| Resin | Example 1 | g | 100 | | | | | | | |
| | Example 2 | g | | 100 | | | | | | |
| | Example 3 | g | | | 100 | | | | | |
| | Comparativ e Example 1 | g | | | | 100 | | | | |
| | Comparativ e Example 2 | g | | | | | 100 | | | |
| | Comparativ e Example 3 | g | | | | | | 100 | | |
| | Comparativ e Example 4 | g | | | | | | | 100 | |
| | Comparativ e Example 5 | g | | | | | | | | 100 |
| Flame retard ant | TCPP | g | 10 | | | | | | | |
| Foam stabili zer | TEGOSTA B ® | g | 1 | | | | | | | |
| Foami ng agent | Cyclopenta ne | g | 12 | | | | | | | |
| | Water | g | 1 | | | | | | | |
| Cataly st | Dabco k-15 | g | 3.5 | | | | | | | |
| | DMCHA | g | 1 | | | | | | | |

| Comp onent | POLYOL | Unit s | Exper iment al Exam ple 1 | Experi ment at Exam ple 2 | Experi ment at Exam ple 3 | Experi menta l Exam ple 4 | Experi mental Exampl e 5 | Experi mental Exampl e 6 | Experi menta l Exam ple 7 | Exper iment al Exam ple 8 |
|---|---|---|---|---|---|---|---|---|---|---|
| Curin g agent | COSMON ATE SR- 500 | g | 200 | | | | | | | |
| | NCO Index | | 300 | | | | | | | |
| - An NCO index is obtained in the following way. | | | | | | | | | | |

EP 4 253 445 A1

$$\text{Index} = \frac{\text{Isocyanate equivalents}}{\text{Polyol equivalents}}$$

$$\text{Isocyanate equivalents} = \frac{\text{Input amount}}{4201/NOC(\%)}$$

$$\text{Polyol equivalents} = \frac{\text{Polyol input amount}}{56100/OH \text{ value}}$$

The physical properties of the prepared polyurethanes are shown in Table 3 below.

[Table 3]

| Compound | | Experimental Example 1 | Experimental Example 2 | Experimental Example 3 | Experimental Example 4 | Experimental Example 5 | Experimental Example 6 | Experimental Example 7 | Experimental Example 8 |
|---|---|---|---|---|---|---|---|---|---|
| Foam physical properties | Total heat release (MJ/m$^2$) | 7.8 | 8.2 | 9.0 | 17.5 | 9.1 | 8.5 | 13.8 | 12.4 |
| | Total smoke generation (m$^2$/m$^2$) | 58 (◎) | 72 (◎) | 91 (◎) | 320 (X) | 90 (O) | 70 (◎) | 150 (△) | 130 (△) |
| | Water absorption (g/100 cm$^2$) | ◎ (0.1) | ◎ (0.3) | O (0.9) | X (5.5) | △ (1.9) | ◎ (0.1) | △ (2.9) | △ (1.5) |
| - Total heat release and total smoke generation: They were measured using a CONE calorimeter (KS F ISO 5660-1). Total smoke generation was evaluated as X: 150 m$^2$/m$^2$ or more, △: 100 to 150 m$^2$/m$^2$, O: 80 to 100 m$^2$/m$^2$, ◎: less than 80 m$^2$/m$^2$.<br>- Water absorption: A 100 × 100 × 25mm test piece was immersed in water at 25 °C, taken out after 10 seconds, left for 30 seconds, weighed as a standard weight, immersed again in clear water, and absorbed water for 96 hours and finally weighed. A water absorption amount was obtained according to the following equation. | | | | | | | | | |

$$\text{Absorption amount (g/100 cm}^2) = (\text{final weight after absorption - standard weight}) / \text{surface area} \times 100$$

Evaluations were expressed as X: 3 g or more, △: 1 to 3 g, O: 0.2 to 1.0 g, and ◎: 0.1 g or less.

The polyols of Examples 1 to 3 had excellent storage stability and compatibility, and flame retardancy of the polyurethane prepared therefrom was also excellent. On the other hand, the polyol of Comparative Example 2 had significantly poor storage stability and compatibility, and Comparative Examples 1, 4 and 5 showed poor results in terms of flame retardancy. In addition, the PIA/DEG polyol of Comparative Example 3 had good physical properties such as flame retardancy and water absorption, but was difficult to use due to poor compatibility with raw materials used in the system polyol.

More specifically, since the polyols of Comparative Examples 1 to 3 are results of using DEG as an alcohol component and the same amount of other acid components, it was possible to compare effects depending on the type of acid component. When PA was used (Comparative Example 1), storage stability and compatibility were maintained excellently, but flame retardancy was greatly reduced. When PTA was used (Comparative Example 2), storage stability and compatibility were greatly reduced. When PIA was used (Comparative Example 3), compatibility was slightly reduced. However, compared to Example 1 in which NPG was mixed as the alcohol component under the same conditions, storage stability and compatibility were reduced, and the total heat release and total smoke generation increased, indicating poor physical properties. That is, when PIA was used alone as the acid component, a much better polyol was obtained when NPG was mixed and used as the alcohol component. In addition, when Comparative Example 3 was compared with Example 3 in which PIA and PA were mixed as acid components, it was confirmed that storage stability and compatibility were significantly improved. That is, when only DEG was used as the alcohol component, polyols having excellent physical properties were obtained when PIA and PA were used together.

Next, the polyols of Example 1 and Comparative Example 3 show different results by using NPG as the alcohol component when PIA was used alone as the acid component, and when NPG was used in combination, storage stability and compatibility were better than when DEG was used alone.

On the other hand, the polyols of Example 3 and Comparative Example 5 are cases in which the mixing ratio was changed when PA and PIA were used as acid components, and flame retardancy was poor in Comparative Example 5 in which the amount of PA was increased.

Therefore, like polyester polyols according to the practice of the present invention, by using PIA alone as the acid component or using PA and PIA in a certain mixing ratio, and using DEG or a mixture of DEG and NPG as the alcohol component, it was confirmed that the storage stability and the compatibility of the polyol were improved, and the flame retardancy and the dimensional stability of the polyurethane prepared using the same could be improved.

**Claims**

1.  A polyester polyol prepared from:

    an acid component including at least one of purified isophthalic acid (PIA) and phthalic anhydride (PA); and
    an alcohol component represented by Chemical Formula 1 below:

    [Chemical Formula 1]           $HO\text{-}L_3\text{-}OH$

    wherein $L_3$ is a straight or branched chain alkylene group having 2 to 6 carbon atoms and unsubstituted or substituted with a hydroxyl group; or a straight or branched chain ether group having 2 to 6 carbon atoms and unsubstituted or substituted with a hydroxyl group.

2.  The polyester polyol of claim 1, wherein the acid component includes 80 to 100 mol% of PIA.

3.  The polyester polyol of claim 1, wherein the alcohol component includes at least one of neopentyl glycol (NPG) and diethylene glycol (DEG).

4.  The polyester polyol of claim 1, wherein NPG and DEG are included as the alcohol component, and a mixing molar ratio of NPG:DEG is 1:2 to 1:20.

5.  A polyurethane prepared from the polyester polyol of any one of claims 1 to 4.

## INTERNATIONAL SEARCH REPORT

| International application No. |
| --- |
| **PCT/KR2021/017881** |

| A. | CLASSIFICATION OF SUBJECT MATTER |
| --- | --- |
| | **C08G 63/12**(2006.01)i; **C08G 18/42**(2006.01)i |

According to International Patent Classification (IPC) or to both national classification and IPC

| B. | FIELDS SEARCHED |
| --- | --- |

Minimum documentation searched (classification system followed by classification symbols)

C08G 63/12(2006.01); C08G 18/34(2006.01); C08G 18/48(2006.01); C08G 18/72(2006.01); C08G 18/76(2006.01); C09D 175/06(2006.01); C09D 7/61(2018.01); C09J 175/04(2006.01); C09J 175/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리에스테르 폴리올(polyester polyol), 폴리우레탄(polyurethane), 이소프탈산(isophthalic acid), 무수프탈산(phthalic anhydride), 네오펜틸글리콜(neopentyl glycol, NPG), 디에틸렌글리콜(diethylene glycole, DEG)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108707412 A (ZHEJIANG JIAN YANG MACROMOLECULES SCIENCE AND TECHNOLOGY LTD.) 26 October 2018 (2018-10-26)<br>See claims 1-6; and paragraphs [0021] and [0027]. | 1-5 |
| X | KR 10-2012-0104977 A (BAYER MATERIALSCIENCE AG) 24 September 2012 (2012-09-24)<br>See claims 1 and 2; and paragraphs [0017]-[0019]. | 1-5 |
| X | KR 10-2008-0008214 A (DAINICHISEIKA COLOR & CHEMICALS MFG CO., LTD.) 23 January 2008 (2008-01-23)<br>See claim 1; and paragraphs [0035], [0061] and [0062]. | 1-5 |
| X | CN 110157370 A (YONGLONG HIGH TECHNOLOGY QINGDAO CO., LTD.) 23 August 2019 (2019-08-23)<br>See paragraphs [0018]-[0020]. | 1-5 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 March 2022** | **18 March 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/017881**

| C. | DOCUMENTS CONSIDERED TO BE RELEVANT |  |
|---|---|---|
| Category* | Citation of document, with indication, where appropriate, of the relevant passages | Relevant to claim No. |
| X | YAN, Q. et al. Preparation and characterization of high initial bonding strength reactive hot melt polyurethane adhesive derived from phthalate polyester polyols. Journal of Adhesion Science and Technology. 2018, vol. 32, no. 20, pp. 2282-2297.<br>    See abstract; and page 2284. | 1,3-5 |

**INTERNATIONAL SEARCH REPORT**
Information on patent family members

International application No.

**PCT/KR2021/017881**

| Patent document cited in search report | | | Publication date (day/month/year) | Patent family member(s) | | | Publication date (day/month/year) |
|---|---|---|---|---|---|---|---|
| CN | 108707412 | A | 26 October 2018 | CN | 108707412 | B | 09 February 2021 |
| KR | 10-2012-0104977 | A | 24 September 2012 | CN | 102666630 | A | 12 September 2012 |
| | | | | CN | 102666630 | B | 28 January 2015 |
| | | | | EP | 2499179 | A1 | 19 September 2012 |
| | | | | US | 2012-0225279 | A1 | 06 September 2012 |
| | | | | US | 8980422 | B2 | 17 March 2015 |
| | | | | WO | 2011-057999 | A1 | 19 May 2011 |
| KR | 10-2008-0008214 | A | 23 January 2008 | CN | 101108890 | A | 23 January 2008 |
| | | | | CN | 101108890 | B | 07 December 2011 |
| | | | | JP | 2008-045101 | A | 28 February 2008 |
| | | | | JP | 4674204 | B2 | 20 April 2011 |
| | | | | TW | 200806700 | A | 01 February 2008 |
| | | | | TW | I477524 | B | 21 March 2015 |
| CN | 110157370 | A | 23 August 2019 | None | | | |

Form PCT/ISA/210 (patent family annex) (July 2019)

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 20120027422